# EUROPEAN PATENT APPLICATION

(11) **EP 4 566 723 A1**
(43) Date of publication of application: **11.06.2025**
(21) Application number: 22955224.5
(22) Date of filing: 15.08.2022
(51) Int. Cl.: B05B 13/00

(54) **SPRAYING DEVICE**

(71) Applicant: Contemporary Amperex Technology Co., Limited, Ningde, Fujian 352100 (CN); Harbin Institute Of Technology, Harbin, Heilongjiang 150001 (CN)
(72) Inventor: LI, Bing, Harbin, Heilongjiang 150001 (CN); YANG, Shuo, Harbin, Heilongjiang 150001 (CN); GE, Xiaoming, Ningde, Fujian 352100 (CN); GUAN, Wenhao, Ningde, Fujian 352100 (CN); ZHONG, Wei, Ningde, Fujian 352100 (CN); CHEN, Yujie, Ningde, Fujian 352100 (CN); LIU, Mingjian, Ningde, Fujian 352100 (CN); TANG, Jiabao, Ningde, Fujian 352100 (CN)
(74) Representative: Gong, Jinping
(86) International application number: PCT/CN2022/112549
(87) International publication number: WO 2024/036442

(57) **Abstract**

Embodiments of the present disclosure provide a spraying apparatus including a spraying region (10a), a spraying body (10), a first processing device (20), and a second processing device (30). The spraying region (10a) is provided with to-be-sprayed object therein. The spraying body (10) is configured to spray the to-be-sprayed object within the spraying region (10a). The first processing device (20) is in communication with the spraying region (10a). The first processing device (20) is configured to receive waste generated during spraying and perform a primary processing on the waste. The second processing device (30) is disposed downstream the first processing device (20) and configured to perform a re-processing on the waste subjected to the primary processing. With the first processing device and the second processing device, the waste generated during the spraying can be processed twice, which effectively increases processing effectiveness and noticeably reduces pollution of the waste, meeting emission requirements.

## Description

### FIELD

The present disclosure relates to the field of spraying technologies, and more particularly, to a spraying apparatus.

### BACKGROUND

Energy conservation and emission reduction is the key to the sustainable development of the automobile industry. Electric vehicles have become an important part of the sustainable development of the automobile industry due to their advantages of energy conservation and environmental protection. For electric vehicles, battery technology is an important factor for their development.

Battery manufacturing involves a spraying process for a surface of a product. An effective processing of waste generated during spraying is important for the protection of the environment.

### SUMMARY

The present disclosure provides a spraying apparatus, capable of effectively reducing pollution of waste generated during spraying.

The present disclosure provides a spraying apparatus. The spraying apparatus includes a spraying region, a spraying body, a first processing device, and a second processing device. The spraying region configured to accommodate a to-be-sprayed object therein. The spraying body is configured to spray the to-be-sprayed object within the spraying region. The first processing device is in communication with the spraying region and is configured to receive waste generated during spraying and perform a primary processing on the waste. The second processing device is disposed downstream the first processing device and configured to perform a re-processing on the waste which has been subjected to the primary processing.

With the first processing device and the second processing device, the waste generated during the spraying can be processed twice, which can effectively increase processing effectiveness and noticeably reduce pollution of the waste, meeting emission requirements.

In some embodiments, the first processing device includes a liquid circulation system, a liquid in the liquid circulation system flowing in a predetermined direction to form a liquid curtain, the liquid curtain being used to absorb a substance in the waste that is capable of dissolving in the liquid.

With the first processing device capable of forming the liquid curtain, the substance in the waste that is capable of dissolving in the liquid can be absorbed by the liquid curtain, such as a gas, a liquid, or a solid powder that is capable of dissolving in the liquid. In addition, a substance having a large particle can precipitate and be recovered when washed away by the liquid curtain.

In some embodiments, the liquid circulation system includes a first chamber having a first inlet connected the spraying region, to allow the liquid to enter the first chamber from the first inlet and flow along an inner wall of the first chamber to form the liquid curtain.

The liquid in the liquid circulation system may enter the first chamber from the first inlet, and then flow along the inner wall of the first chamber to form the liquid curtain. The waste generated during the spraying can be dissolved or precipitate under an effect of the liquid curtain after entering the first chamber from the first inlet. Therefore, the primary processing is realized.

In some embodiments, the inner wall of the first chamber has a portion inclined relative to a horizontal direction. Flowing of the liquid can be facilitated by providing the portion that is inclined relative to the horizontal direction. For example, the inner wall of the first chamber may include a portion that allows the liquid to be inclined downwards. In this way, the flowing of the liquid can be realized by the gravity of the liquid, which reduces a requirement for a flowing driving force.

In some embodiments, the liquid circulation system further includes a circulation pipeline and a circulation pump. The first chamber has a first outlet. The circulation pipeline is connected between the first outlet and the first inlet. The circulation pump is disposed at the circulation pipeline.

With the circulation pipeline and the circulation pump, the first outlet and the first inlet can be connected each other through the circulation pipeline. Therefore, the liquid can be automatically circulated between the first outlet and the first inlet to realize circulation of the liquid.

In some embodiments, the circulation pipeline and the circulation pump are disposed outside the first chamber.

Disposing the circulation pipeline and the circulation pump outside the first chamber can prevent the circulation pipeline and the circulation pump from obstructing the flowing of the liquid inside the first chamber and prevent the liquid from corroding the circulation pipeline and the circulation pump.

In some embodiments, the first chamber has a second outlet, and the liquid is to be discharged from the first chamber via the second outlet.

With the second outlet, when a waste content in the liquid is high and the liquid has a low solubility, the liquid can be discharged by exposing the second outlet to replace the liquid with the fresh liquid having a higher solubility.

In some embodiments, the first chamber has a liquid storage region configured to store the liquid. The first outlet is flush with or above a bottom surface of the liquid storage region. The second outlet is in communication with the liquid storage region.

With the liquid storage region, the liquid can be stored temporarily, and a liquid storage capacity inside the first chamber can be increased to increase an amount of liquid involved in a circulation. Therefore, an amount of the waste absorbed is increased, which improves the processing effectiveness.

In some embodiments, the second processing device includes a plurality of filtering layers. With the plurality of filtering layers, a filtration effect can be effectively improved to reduce the pollution of the waste.

In some embodiments, the second processing device includes at least one of a stainless steel filtering screen, a High Efficiency Particulate Air Filter (HEPA) filtering screen, activated carbon, and a porous foam.

The stainless steel filtering screen can further filter out remaining large particles. The HEPA filtering screen can remove small particles. For example, the HEPA filtering screen can trap both dust particles and suspended substances that are greater than 0.5 µm. The activated carbon can absorb remaining small organic molecules and odors. The porous foam can further absorb remaining particles and exhaust gases.

In some embodiments, the second processing device includes a stainless steel filtering screen, an HEPA filtering screen, activated carbon, and a porous foam that are arranged sequentially in a discharge direction of the waste. In the embodiments, with the stainless steel filtering screen, the HEPA filtering screen, the activated carbon, and the porous foam that are arranged sequentially in the discharge direction of the waste, an object of step-by-step filtration can be achieved based on sizes of to-be-filtered particles, and thus an overall filtration effect is satisfactory.

In some embodiments, the spraying apparatus further includes a housing and a cover plate. The spraying body is disposed inside the housing. The spraying region is formed by an internal space of the housing. The cover plate covers a bottom of the housing. The first processing device is mounted at a bottom surface of the cover plate. The cover plate has a first through hole connecting the inside of the housing with the first processing device.

With the housing and the cover plate, a substantially closed environment can be formed. Disposing the spraying body in a space formed by the housing and the cover plate can effectively avoid splashing of paint during the spraying, and can also concentrate the waste generated during the spraying in the space for subsequent centralized processing through the first processing device and the second processing device.

In some embodiments, the spraying body includes a base and a spray nozzle. The base is configured to support the to-be-sprayed object. The spray nozzle is disposed above the base and configured to spray paint to the to-be-sprayed object.

The base is used to provide stable support for the to-be-sprayed object. A quantity of spray nozzles can be set flexibly as desired.

In some embodiments, the spraying body further includes: a first driving device in driving connection with the spray nozzle, the first driving device being configured to drive the spray nozzle to move in a first direction relative to the base; a second driving device; and a third driving device. The first driving device is mounted at the second driving device, and the second driving device is configured to drive the first driving device and the spray nozzle to move in a second direction relative to the base. The second driving device is mounted at the third driving device, and the third driving device is configured to drive the second driving device, the first driving device, and the spray nozzle to move in a third direction relative to the base. The first direction, the second direction, and the third direction are perpendicular to each other.

With the first driving device, the second driving device, and the third driving device, the spray nozzle can be moved in three directions perpendicular to each other to adjust a position of the spray nozzle relative to the to-be-sprayed object, which improves a spraying effect.

In some embodiments, the first driving device includes a driving body and a bracket in driving connection with the driving body. The spray nozzle is rotatably mounted at the bracket.

With the spray nozzle rotatably mounted at the bracket, an angle of the spray nozzle relative to the bracket and an angle of the spray nozzle relative to the to-be-sprayed object can be adjusted. Therefore, spraying at different positions of the to-be-sprayed object is realized.

In some embodiments, the base includes a support platform and a first support seat. The support platform is configured to support the to-be-sprayed object, and rotatably mounted at the first support seat to enable an angle of a support plane of the support platform relative to a horizontal plane to be adjustable.

Through setting the support platform to be rotatable relative to the first support seat, the angle of the support plane of the support platform relative to the horizontal plane can be adjusted as desired. Through adjusting the angle of the support plane of the support platform relative to the horizontal plane, relative positions of the spray nozzle and the to-be-sprayed object can be adjusted to prevent large droplets sprayed by the spray nozzle from falling on the to-be-sprayed object, or to prevent the large droplets from falling outside the support platform.

In some embodiments, the first support seat includes a support seat body, a lead screw, a slider, and a support rod. The lead screw is rotatably mounted at the support seat body. The slider has a first mounting hole and is mounted at the lead screw through the first mounting hole. A hole wall of the first mounting hole has an internal thread. The support rod has two ends rotatably connected to the slider and the support platform, respectively. The support platform is rotatably connected to the support seat body.

After the lead screw is driven to rotate, the slider can be driven to move in an axial direction of the lead screw through an engagement between an outer thread at an outer periphery of the lead screw and an inner thread of the first mounting hole. In this way, the support platform is lifted by the support rod, which allows the support platform to rotate relative to the first support seat. Therefore, the angle of the support plane of the support platform relative to the horizontal plane is adjusted.

In some embodiments, the base further includes a second support seat and a height adjustment device. The height adjustment device is disposed between the first support seat and the second support seat to adjust a height of the first support seat relative to the second support seat.

With the height adjustment device, the height of the first support seat relative to the second support seat can be adjusted to adjust a height of the to-be-sprayed object relative to the second support seat, finally realizing an object of adjusting a distance between the spray nozzle and the to-be-sprayed object.

In some embodiments, the spraying apparatus further includes a heating device disposed at the base. The heating device is configured to heat the to-be-sprayed object to a temperature ranging from 30 °C to 220 °C. A heating temperature of the heating device is adjustable. Through disposing the heating device at the base, the to-be-sprayed object can be directly heated to meet a spraying requirement. In addition, since the heating temperature of the heating device is adjustable, the heating temperature can be adjusted as desired.

**In** some embodiments, the spraying apparatus further includes a temperature control device and/or a humidity control device. The temperature control device is configured to adjust a temperature of the spraying region to range from 25 °C to 65 °C. The humidity control device is configured to adjust a humidity of the spraying region to range from 25 % to 95 %.

With the temperature control device and/or the humidity control device, the temperature and the humidity of the spraying region can be effectively controlled to meet the spraying requirement.

The above description is merely an overview of the technical solutions of the present disclosure. To facilitate a clear under bracketing of technical means of the present disclosure and the implementations of the technical solutions in accordance with the contents of the specification, and to clarify and explain the above and other objects, features, and advantages of the present disclosure, specific embodiments of the present disclosure will be described below.

### BRIEF DESCRIPTION OF THE DRAWINGS

**In** order to clearly explain technical solutions of embodiments of the present disclosure, drawings used in the embodiments of the present disclosure are briefly described below. Obviously, the drawings as described below are merely some embodiments of the present disclosure. Based on these drawings, other drawings can be obtained by those skilled in the art without creative effort.
FIG. 1 is a schematic view of a structure of a spraying apparatus according to some embodiments of the present disclosure.
FIG. 2 is a schematic view of an internal structure of a spraying apparatus according to some embodiments of the present disclosure.
FIG. 3 is a schematic view of a structure of an exhaust gas processing system of a spraying apparatus according to some embodiments of the present disclosure.
FIG. 4 is a schematic view of a structure of a first processing device of a spraying apparatus according to some embodiments of the present disclosure.
FIG. 5 is a schematic view of a structure of a second processing device of a spraying apparatus according to some embodiments of the present disclosure.
FIG. 6 is a schematic view of a second processing device of a spraying apparatus according to some embodiments of the present disclosure.
FIG. 7 is a schematic view of a structure of a cover plate of a spraying apparatus according to some embodiments of the present disclosure.
FIG. 8 is a schematic view of a structure of a support platform and a first support seat of a spraying apparatus according to some embodiments of the present disclosure.
FIG. 9 is a schematic view of a structure of a base of a spraying apparatus according to some embodiments of the present disclosure.
FIG. 10 is a schematic view of a structure of a spray nozzle and a driving system of a spraying apparatus according to some embodiments of the present disclosure.

The accompanying drawings are not drawn to actual scale.

Description of reference numerals:
10a, spraying region; 10, spraying body; 20, first processing device; 30, second processing device; 40, housing; 50, cover plate; 60, box; 70, connection device;
1, base; 2, spray nozzle; 3, driving device;
11, support platform; 12, first support seat; 13, second support seat; 14, height adjustment device;
111, support platform body; 112, first support plate; 113, first connection plate;
121, support seat body; 122, lead screw; 123, slider; 124, support rod; 125, limiting rod; 126, hand-cranked rod; 127, second support plate;
141, fourth driving device; 142, scissor;
310, first driving device; 311, driving body; 312, bracket; 320, second driving device; 330, third driving device;
21, first chamber; 22, first inlet; 23, liquid curtain; 24, circulation pipeline; 25, circulation pump; 26, first outlet; 27, second outlet; 28, liquid storage region; 29, third outlet;
31, second chamber; 32, second inlet; 33, fourth outlet; 34, stainless steel filtering screen; 35, HEPA filtering screen; 36, activated carbon; 37, porous foam;
41, second through hole;
51, first through hole;
71, second connection plate; 711, connection hole; 72, screw.

### DETAILED DESCRIPTION

Embodiments of technical solutions of the present disclosure will be described in detail below with reference to the accompanying drawings. The following embodiments are only used to explain the technical solutions of the present disclosure more clearly, and therefore should be construed as examples only, rather than limitations of the protection scope of the present disclosure.

Unless otherwise defined, all technical and scientific terms used herein have the same meaning as commonly understood by those skilled in the art of the present disclosure. Terms in the present disclosure herein are only used for the purpose of describing specific embodiments, and are not intended to limit the present disclosure. Terms "including", "having", and any variations thereof in the specification, claims, and accompanying drawings of the present disclosure are intended to cover non-exclusive inclusions.

In the description of the embodiments of the present disclosure, the technical terms "first", "second", etc. are used to distinguish different objects, and cannot be understood as indicating or implying relative importance or implicitly specifying a number, a particular order, or a primary or secondary relationship of the indicated technical features. In addition, the term "perpendicular" should be interpreted within the allowable margin of error, rather than in the strict sense. The term "parallel" should be interpreted within the allowable margin of error, rather than in the strict sense.

In the present disclosure, reference to "embodiment" means that a particular feature, structure, or characteristic described in conjunction with the embodiment or implementation may be included in at least one embodiment of the present disclosure. The presence of the term at each place in the specification does not necessarily refer to the same embodiment, nor does it refer to a separate or alternative embodiment that is mutually exclusive of other embodiments. It should be understood by those skilled in the art, both explicitly and implicitly, that the embodiments described herein may be combined with other embodiments.

In the description of the embodiments of the present disclosure, the term "and/or" only represents a relationship between correlated objects, including three relationships. For example, "A and/or B" may mean three situations: A only, B only, or both A and B. In addition, the character "/" in the present disclosure generally represents an "or" relationship between the correlated objects preceding and succeeding the symbol.

In the description of the embodiments of the present disclosure, the term "a plurality of" refers to more than two, unless otherwise clearly and specifically defined. Similarly, "plurality of groups" refers to more than two groups, and "plurality of pieces" refers to more than two pieces, unless otherwise clearly and specifically defined.

In the description of the embodiments of the present disclosure, the orientation or the position indicated by technical terms such as "center", "longitudinal", "lateral", "length", "width", "thickness", "over", "below", "front", "rear", "left", "right", "vertical", "horizontal", "top", "bottom", "inner", "outer", "clockwise", "anti-clockwise", "axial", "radial", and "circumferential" should be construed to refer to the orientation and the position as shown in the drawings, and is only for the convenience of describing the embodiments of the present disclosure and simplifying the description, rather than indicating or implying that the pointed device or element must have a specific orientation, or be constructed and operated in a specific orientation, and therefore cannot be understood as a limitation of the embodiments of the present disclosure.

In the description of the embodiments of the present disclosure, unless otherwise clearly specified and limited, technical terms such as "install", "connect", "connect to", "fix" and the like should be understood in a broad sense. For example, it may be a fixed connection or a detachable connection or connection as one piece; mechanical connection or electrical connection; direct connection or indirect connection through an intermediate; internal communication of two components or the interaction relationship between two components. For those skilled in the art, the specific meaning of the above-mentioned terms in the embodiments of the present disclosure can be understood according to specific circumstances.

It was found that, in the related art, when a to-be-sprayed object is sprayed by a spraying apparatus, the spraying apparatus is usually placed in a closed environment to avoid splashing of paint sprayed by the spraying apparatus.

However, it was further found that, although placing the spraying apparatus in the closed environment can solve the problem of splashing of the paint, this will bring a new problem that: the closed environment in which the spraying apparatus is located has a high level of pollution since organic solvents are often used as carriers for the paint, but many organic solvents are harmful to human beings and pollute the environment.

In the related art, to solve the problem that the closed environment in which the spraying apparatus is located has a high level of pollution, a specialized exhaust gas processing device is provided for processing an exhaust gas in the closed environment in which the spraying apparatus is located, but a processing result is less than ideal.

To improve the processing result of the exhaust gas processing device on the exhaust gas, a structure of the spraying apparatus is improved.

In an embodiment of the spraying apparatus provided in the present disclosure, the spraying apparatus includes a spraying body, a first processing device, and a second processing device. The to-be-sprayed object can be sprayed by the spraying body. With the first processing device and the second processing device, waste generated during spraying can be processed twice to reduce pollution of the waste generated during the spraying to human beings or the environment. Through processing the waste twice with the first processing device and the second processing device, a processing effect can be greatly improved to meet emission requirements.

The spraying apparatus according to the embodiments of the present disclosure can be used for spraying various to-be-sprayed objects that require paint spraying, such as pigment spraying on an outer surface of a 3D printed product and gel spraying on an outer surface of a battery pack.

The battery pack mentioned above may be applied in an electric device using a battery as a power source and is configured to provide electrical energy to the electric device. The electric device may be, but is not limited to, a cell phone, a portable device, a laptop computer, an electric scooter, an electric vehicle, a ship, a spacecraft, an electric toy, an electric tool, and the like. For example, the spacecraft includes an airplane, a rocket, a space shuttle, a spaceship, or the like. The electric toy includes a fixed electric toy or a mobile electric toy, e.g., a game console, an electric car toy, an electric ship toy, and an electric airplane toy. The electric tool includes an electric metallic cutting tool, an electric grinding tool, an electric assembly tool, and an electric railroad-specific tool, e.g., an electric drill, an electric grinder, an electric wrench, an electric screwdriver, an electric hammer, an electric impact drill, a concrete vibrator, and an electric planer.

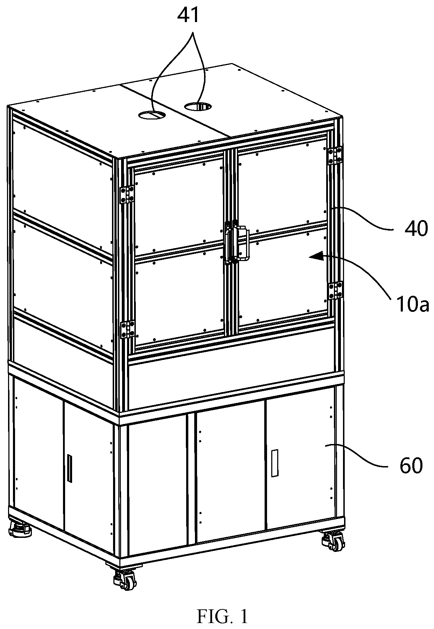

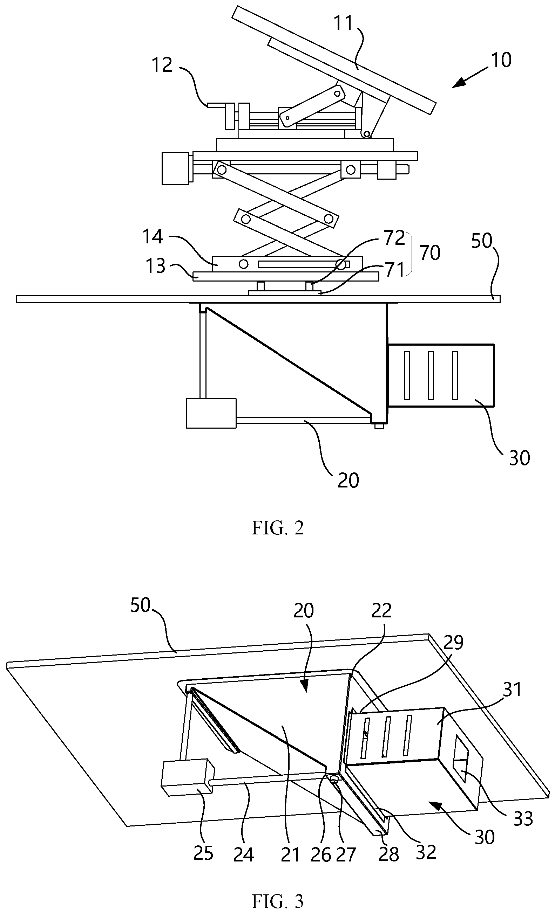

As illustrated in FIG. 1 and FIG. 2, in an embodiment of the spraying apparatus provided in the present disclosure, the spraying apparatus includes a spraying region 10a, a spraying body 10, a first processing device 20, and a second processing device 30. The spraying region 10a configured to accommodate a to-be-sprayed object therein. The spraying body 10 is configured to spray the to-be-sprayed object within the spraying region 10a. The first processing device 20 is in communication with the spraying region 10a, and configured to receive waste generated during spraying and perform a primary processing on the waste. The second processing device 30 is disposed downstream the first processing device 20 and configured to perform a re-processing on the waste which has been subjected to the primary processing.

With the first processing device 20 and the second processing device 30, the waste generated during the spraying can be processed twice, which can effectively increase processing effectiveness and noticeably reduce pollution of the waste, meeting emission requirements.

In the embodiments of the present disclosure, the waste generated during the spraying includes at least one of an exhaust gas, a waste liquid, and solid particles.

As illustrated in FIG. 2 to FIG. 6, in some embodiments, the first processing device 20 includes a liquid circulation system. A liquid in the liquid circulation system flows in a predetermined direction to form a liquid curtain 23. The liquid curtain 23 is used to absorb a substance in the waste that is capable of dissolving in the liquid.

The liquid curtain 23 is a curtain-like filter formed when the liquid flows in the predetermined direction. When passing through the liquid curtain 23, the substance in the waste that is capable of dissolving in the liquid is absorbed by the liquid for performing filtration on the waste.

With the first processing device 20 capable of forming the liquid curtain 23, the substance in the waste that is capable of dissolving in the liquid, such as a gas, a liquid, or a solid powder that is capable of dissolving in the liquid, can be absorbed by the liquid curtain 23. In addition, a substance having a large particle can precipitate and be recovered when washed away by the liquid curtain 23.

The liquid in the liquid circulation system may be water or other solvents, The liquid curtain 23 formed with water may be referred to simply as a "water curtain".

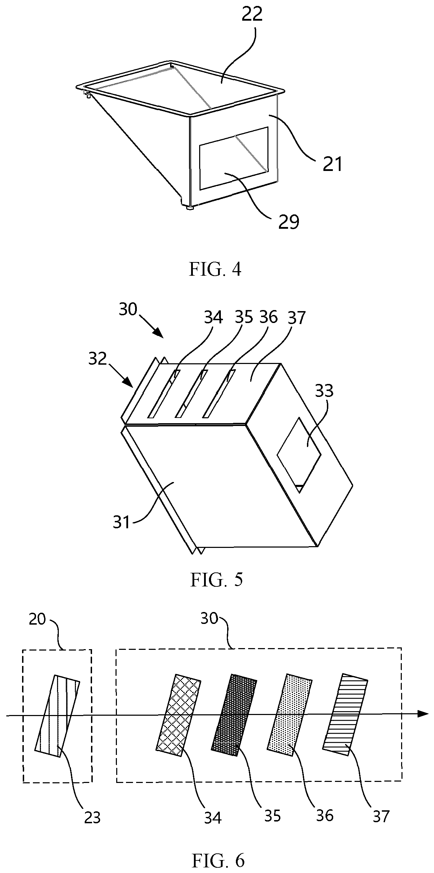

As illustrated in FIG. 3 and FIG. 4, in some embodiments, the liquid circulation system includes a first chamber 21. The first chamber 21 has a first inlet 22 in communication with the spraying region 10a, to allow the liquid to enter the first chamber 21 from the first inlet 22 and flow along an inner wall of the first chamber 21 to form the liquid curtain 23.

The liquid in the liquid circulation system may enter the first chamber 21 from the first inlet 22, and then flow along the inner wall of the first chamber 21 to form the liquid curtain 23. The waste generated during the spraying can be dissolved or precipitate under an effect of the liquid curtain 23 after entering the first chamber 21 from the first inlet 22. Therefore, the primary processing is realized.

Of course, in other embodiments, the liquid curtain 23 is not necessarily formed at a wall surface of the first chamber 21. A position for forming the liquid curtain 23 varies based on an entry position of the liquid. For example, if the liquid enters from an edge of the first inlet 22, the liquid curtain 23 will be formed at the inner wall of the first chamber 21. If the liquid enters from somewhere in a middle of the first inlet 22, the liquid curtain 23 may be at a distance from the inner wall of the first chamber 21.

In some embodiments, the first processing device 20 includes a guide member configured to guide the waste from the spraying region 10a into the first chamber 21. With the guide member, an entry position of the waste can be purposefully planned. For example, the waste from the spraying region 10a can be guided to the inner wall of the first chamber 21 by the guide member to form the liquid curtain 23 at the inner wall of the first chamber 21.

In some embodiments, the inner wall of the first chamber 21 has a portion that is inclined relative to a horizontal direction. With the portion inclined relative to the horizontal direction, flowing of the liquid can be facilitated. For example, the inner wall of the first chamber 21 may include a portion that allows the liquid to be inclined downwards. In this way, the flowing of the liquid can be realized by the gravity of the liquid, which reduces a requirement for a flowing driving force.

As illustrated in FIG. 3, a left side surface of the first chamber 21 is an inclined surface. The liquid entering the first chamber 21 may also flow downwards along this inclined surface to form the liquid curtain 23.

In other embodiments, a front side surface, a rear side surface, or the like of the first chamber 21 may also be formed as an inclined surface.

In some embodiments, the liquid circulation system further includes a circulation pipeline 24 and a circulation pump 25. The first chamber 21 has a first outlet 26. The circulation pipeline 24 is connected between the first outlet 26 and the first inlet 22. The circulation pump 25 is disposed at the circulation pipeline 24.

With the circulation pipeline 24 and the circulation pump 25, the first outlet 26 and the first inlet 23 can be connected each other through the circulation pipeline 24. Therefore, the liquid can be automatically circulated between the first outlet 26 and the first inlet 22 to realize circulation of the liquid.

In some embodiments, the circulation pipeline 24 and the circulation pump 25 are disposed outside the first chamber 21. Disposing the circulation pipeline 24 and the circulation pump 25 outside the first chamber 21 can prevent the circulation pipeline 24 and the circulation pump 25 from obstructing the flowing of the liquid inside the first chamber 21 and preventing the liquid from corroding the circulation pipeline 24 and the circulation pump 25.

In some embodiments, the first chamber 21 has a second outlet 27, and the liquid being to be discharged from the first chamber 21 via the second outlet.

With the second outlet 27, when a waste content in the liquid is high and the liquid has a low solubility, the liquid can be discharged by exposing the second outlet 27 to replace the liquid with the fresh liquid having a higher solubility.

In some embodiments, the first chamber 21 has a liquid storage region 28 configured to store the liquid. The first outlet 26 is flush with or above a bottom surface of the liquid storage region 28. The second outlet 27 is in communication with the liquid storage region 28.

With the liquid storage region 28, the liquid can be stored temporarily, and a liquid storage capacity inside the first chamber 21 can be increased to increase an amount of liquid involved in a circulation. Therefore, an amount of the waste absorbed is increased, which improves the processing effectiveness.

In some embodiments, the second processing device 30 includes a plurality of filtering layers. With the plurality of filtering layers, a filtration effect can be effectively improved to reduce the pollution of the waste.

As illustrated in FIG. 5 and FIG. 6, in some embodiments, the second processing device 30 includes at least one of a stainless steel filtering screen 34, a High Efficiency Particulate Air Filter (HEPA) filtering screen 35, activated carbon 36, and a porous foam 37.

The liquid curtain 23 in the first processing device 20 can absorb the vast majority of organic gases and large particles. The stainless steel filtering screen 34 can further filter out remaining large particles. The HEPA filtering screen 35 can remove small particles. For example, the HEPA filtering screen can trap both dust particles and suspended substances that are greater than 0.5 µm. The activated carbon 36 can absorb remaining small organic molecules and odors. The porous foam 37 can further absorb remaining particles and exhaust gases.

In some embodiments, the second processing device 30 includes the stainless steel filtering screen 34, the HEPA filtering screen 35, the activated carbon 36, and the porous foam 37 that are arranged sequentially in a discharge direction of the waste.

In an embodiment illustrated in FIG. 5 and FIG. 6, the stainless steel filtering screen 34, the HEPA filtering screen 35, the activated carbon 36, and the porous foam 37 are arranged sequentially in the discharge direction of the waste. With such an arrangement, the waste can be processed step by step based on sizes of particles, and thus overall processing effectiveness is satisfactory.

In other embodiments, the stainless steel filtering screen 34, the HEPA filtering screen 35, the activated carbon 36, and the porous foam 37 may be freely selected as desired, or a quantity and an arrangement order for each filtering layer may be adjusted as desired.

According to the embodiments of the present disclosure, with the liquid curtain 23 in the first processing device 20 and the stainless steel filtering screen 34, the HEPA filtering screen 35, the activated carbon 36, and the porous foam 37 in the second processing device 30, particles and organic exhaust gases can be effectively filtered out to achieve harmless emissions.

As illustrated in FIG. 1 and FIG. 2, in some embodiments, the spraying apparatus further includes a housing 40 and a cover plate 50. The spraying body 10 is disposed inside the housing 40. The spraying region 10a is formed by an internal space of the housing 40. The cover plate 50 covers a bottom of the housing 40. The first processing device 20 is mounted at a bottom surface of the cover plate 50. The cover plate 50 has a first through hole 51 connecting the inside of the housing 40 with the first processing device 20.

With the housing 40 and the cover plate 50, a substantially closed environment can be formed. Disposing the spraying body 10 in a space formed by the housing 40 and the cover plate 50 can effectively avoid splashing of paint during the spraying, and can also concentrate the waste generated during the spraying in the space for subsequent centralized processing through the first processing device 20 and the second processing device 30.

Each of a quantity and a shape of the first through hole 51 may be of a variety of options.

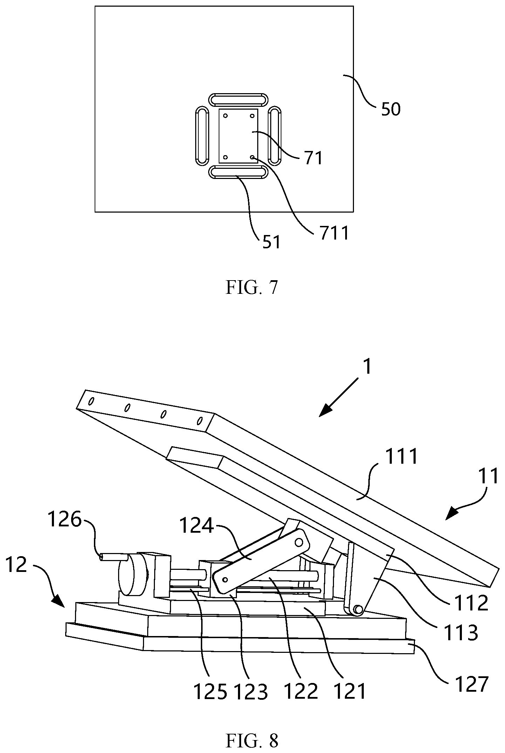

As illustrated in FIG. 7, the cover plate 50 has four first through holes 51 in an elliptical shape. The four first through holes 51 are formed in a circumferential direction of the base 1. The waste inside the housing 40 may enter the first processing device 20 through the first through holes 51 for the primary processing.

The housing 40 is provided with an openable door to facilitate replacement of the spray nozzle 2, cleaning of the waste inside the housing 40, replacement of the base 1, etc.

In some embodiments, the spraying body 10 includes a base 1 and a spray nozzle 2. The base 1 is configured to support the to-be-sprayed object. The spray nozzle 2 is disposed above the base 1 and configured to spray paint to the to-be-sprayed object.

The base 1 is used to provide stable support for the to-be-sprayed object. A quantity of spray nozzles 2 can be set flexibly as desired.

As illustrated in FIG. 8, in some embodiments, the base 1 includes a support platform 11 and a first support seat 12. The support platform 11 is configured to support the to-be-sprayed object, and rotatably mounted at the first support seat 12 to enable an angle of a support plane of the support platform 11 relative to a horizontal plane to be adjustable.

Through setting the support platform 11 to be rotatable relative to the first support seat 12, the angle of the support plane of the support platform 11 relative to the horizontal plane can be adjusted as desired. Through adjusting the angle of the support plane of the support platform 11 relative to the horizontal plane, relative positions of the spray nozzle 2 and the to-be-sprayed object can be adjusted, thereby preventing large droplets sprayed by the spray nozzle 2 from falling on the to-be-sprayed object, or preventing the large droplets from falling outside the support platform 11.

**In** some embodiments, the first support seat 12 includes a support seat body 121, a lead screw 122, a slider 123, and a support rod 124. The lead screw 122 is rotatably mounted at the support seat body 121. The slider 123 has a first mounting hole. A hole wall of the first mounting hole has an internal thread. The slider 123 is mounted at the lead screw 122 through the first mounting hole. The support rod 124 has two ends rotatably connected to the slider 123 and the support platform 11, respectively. The support platform 11 is rotatably connected to the support seat body 121.

After the lead screw 122 is driven to rotate, the slider 123 can be driven to move in an axial direction of the lead screw 122 through an engagement between an outer thread at an outer periphery of the lead screw 122 and an inner thread of the first mounting hole. In this way, the support platform 11 is lifted by the support rod 124, which allows the support platform 11 to rotate relative to the first support seat 12. Therefore, the angle of the support plane of the support platform 11 relative to the horizontal plane is adjusted.

In some embodiments, the first support seat 12 further includes a limiting rod 125. The limiting rod 125 is arranged in parallel with the lead screw 122, has a smooth surface, and passes through a second mounting hole formed at the slider 123. When the slider 123 moves in the axial direction of the lead screw 122, the limiting rod 125 can guide a movement of the slider 123 and also prevent the slider 123 from rotating in a circumferential direction of the lead screw 122, improving stability of the movement of the slider 123.

A quantity of the limiting rod 125 may be set flexibly. For example, one limiting rod 125 may be disposed at each of two sides of the lead screw 122 to further enhance the stability of the movement of the slider 123.

In some embodiments, the first support seat 12 further includes a hand-cranked rod 126. The hand-cranked rod 126 is connected to an end part of the lead screw 122. The lead screw 122 can be driven to rotate relative to the support seat body 121 by turning the hand-cranked rod 126.

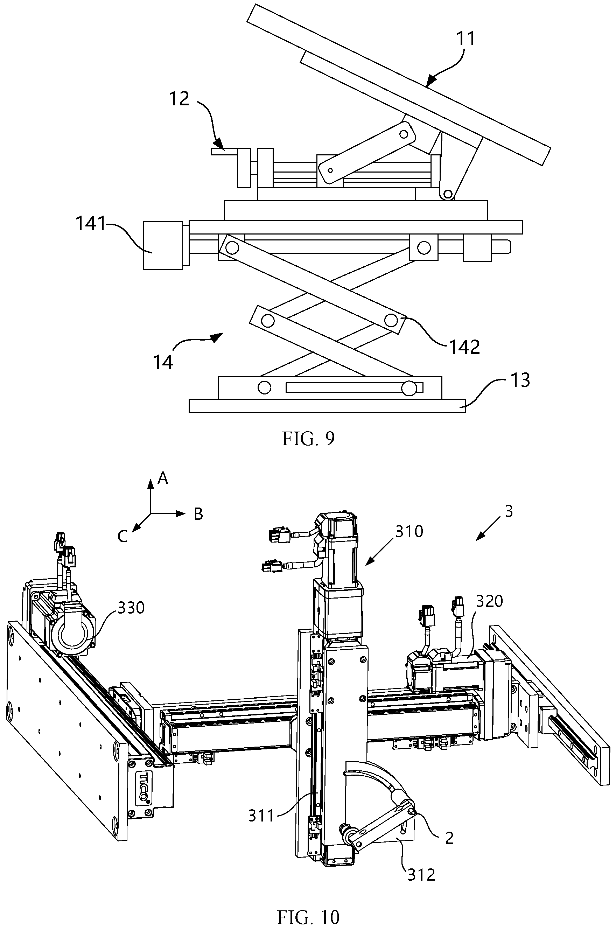

As illustrated in FIG. 9, in some embodiments, the base 1 further includes a second support seat 13 and a height adjustment device 14. The height adjustment device 14 is disposed between the first support seat 12 and the second support seat 13 to adjust a height of the first support seat 12 relative to the second support seat 13.

With the height adjustment device 14, the height of the first support seat 12 relative to the second support seat 13 can be adjusted to adjust a height of the to-be-sprayed object relative to the second support seat 13, finally realizing an object of adjusting a distance between the spray nozzle 2 and the to-be-sprayed object.

A specific structure of the height adjustment device 14 may be of a variety of options. For example, an elastic device or a retractable device may be used.

As illustrated in FIG. 9, the height adjustment device 14 has a scissor structure and includes a fourth driving device 141 and scissors 142. With the fourth driving device 141, the scissors 142 can be driven up and down to adjust the height of the first support seat 12 relative to the second support seat 13.

As illustrated in FIG. 10, in some embodiments, the spraying body 10 further includes a first driving device 310, a second driving device 320, and a third driving device 330. The first driving device 310 is in driving connection with the spray nozzle 2 and is configured to drive the spray nozzle 2 to move in a first direction A relative to the base 1. The first driving device 310 is mounted at the second driving device 320. The second driving device 320 is configured to drive the first driving device 310 and the spray nozzle 2 to move in a second direction B relative to the base 1. The second driving device 320 is mounted at the third driving device 330. The third driving device 330 is configured to drive the second driving device 320, the first driving device 310, and the spray nozzle 2 to move in a third direction C relative to the base 1. The first direction A, the second direction B, and the third direction C are perpendicular to each other.

With the first driving device 310, the second driving device 320, and the third driving device 330, the spray nozzle 2 can be moved in three directions perpendicular to each other to adjust a position of the spray nozzle 2 relative to the to-be-sprayed object, which improves a spraying effect.

In some embodiments, the first driving device 310 includes a driving body 311 and a bracket 312 in driving connection with the driving body 311. The spray nozzle 2 is rotatably mounted at the bracket 312.

With the spray nozzle 2 rotatably mounted at the bracket 312, an angle of the spray nozzle 2 relative to the bracket 312 and an angle of the spray nozzle 2 relative to the to-be-sprayed object can be adjusted. Therefore, spraying at different positions of the to-be-sprayed object is realized.

In some embodiments, the spray nozzle 2 is detachably mounted at the bracket 312 to facilitate replacement of the spray nozzle 2 in accordance with different needs.

During the spraying, a modified substance is pre-dispersed well in a dispersant, and then sprayed at a high speed owing to a high pressure obtained at the high-pressure spray nozzle 2 under propulsion of an auxiliary gas, to form micron-sized or submicron-sized fog droplets. As the driving device drives the spray nozzle 2 to move, the fog droplets uniformly fall onto the to-be-sprayed object. Through physical and chemical reactions, a surface modification layer is formed at the to-be-sprayed object to complete a surface modification of the to-be-sprayed object.

In some embodiments, the spraying apparatus further includes a heating device disposed at the base 1. The heating device is configured to heat the to-be-sprayed object to a temperature ranging from 30 °C to 220 °C. A heating temperature of the heating device is adjustable. Through disposing the heating device at the base 1, the to-be-sprayed object can be directly heated to meet a spraying requirement. In addition, since the heating temperature of the heating device is adjustable, the heating temperature can be adjusted as desired to meet different spraying requirements of different to-be-sprayed objects.

In some embodiments, the heating device may be an electric heating device. The electric heating device is more convenient and efficient for temperature control.

In some embodiments, the spraying apparatus further includes a temperature control device and/or a humidity control device. The temperature control device is configured to adjust a temperature of the spraying region 10a to range from 25 °C to 65 °C. The humidity control device is configured to adjust a humidity of the spraying region 10a to range from 25 % to 95 %.

With the temperature control device and/or the humidity control device, the temperature and the humidity of the spraying region 10a can be effectively controlled to meet the spraying requirement.

The temperature control device and/or the humidity control device may be mounted at a top of the housing 40.

As illustrated in FIG. 1, in some embodiments, a top surface of the housing 40 has two second through holes 41. The temperature control device and/or the humidity control device includes a gas delivery pipe. The gas delivery pipe passes through the second through hole 41 to enter the inside of the housing 40. In this way, a gas with temperature and humidity meeting the requirement can be delivered to the inside of the housing 40 to adjust the temperature and the humidity of the inside of the housing 40.

A structure of the spraying apparatus according to an embodiment of the present disclosure is described below in conjunction with FIG. 1 to FIG. 10.

As illustrated in FIG. 1 and FIG. 2, the spraying apparatus includes the spraying body 10, the first processing device 20, the second processing device 30, the housing 40, the cover plate 50, a box 60, and a connection device 70.

As illustrated in FIG. 1, the spraying body 10 is disposed in a substantially closed space formed by the housing 40 and the cover plate 50. The first processing device 20 and the second processing device 30 are disposed in the box 60. The box 60 is disposed below the cover plate 50, and is provided with an openable door to facilitate maintenance of the first processing device 20 and the second processing device 30.

The spraying body 10 includes the base 1, the spray nozzle 2, and a driving device 3.

As illustrated in FIG. 2, the base 1 includes the support platform 11, the first support seat 12, the second support seat 13, and the height adjustment device 14.

The spraying body 10 is mounted at an upper surface of the cover plate 50 through the connection device 70. The connection device 70 includes a second connection plate 71 and a screw 72. The second connection plate 71 is mounted at the cover plate 50 and has a connection hole 711. The screw 72 passes through the connection hole 711 of the second connection plate 71 and the second support seat 13 of the spraying body 10 to connect the spraying body 10 with the cover plate 50.

As illustrated in FIG. 3, the first processing device 20 is mounted at a lower surface of the cover plate 50, and the second processing device 30 is connected downstream the first processing device 20.

The first processing device 20 includes the first chamber 21, the circulation pipeline 24, and the circulation pump 25. The first chamber 21 has the first inlet 22, the first outlet 26, the second outlet 27, and a third outlet 29. The first chamber 21 has the liquid storage region 28. The circulation pipeline 24 is connected between the first inlet 22 and the first outlet 26. The circulation pump 25 is disposed at the circulation pipeline 24. The circulation pipeline 24 and the circulation pump 25 are located outside the first chamber 21. The second outlet 27 is in communication with the liquid storage region 28. The first outlet 26 is flush with or above the bottom surface of the liquid storage region 28.

As illustrated in FIG. 4, the first inlet 22 is formed at a top surface of the first chamber 21. The third outlet 29 is formed at a right side surface of the first chamber 21. The first chamber 21 is in communication with the second processing device 30 through the third outlet 29.

The left side surface of the first chamber 21 is arranged to be inclined downwards. Each of the front side surface and the rear side surface of the first chamber 21 has a substantially triangular shape.

The liquid flows to the first outlet 26 from the first inlet 22 and forms a self-circulation through the circulation pipeline 24 and the circulation pump 25. The waste from the spraying region 10a above the cover plate 50 reaches the first inlet 22 through the first through hole 51 at the cover plate 50, enters the first chamber 21 from the first inlet 22, and then flows along the inner wall of the first chamber 21 to form the liquid curtain 23. A small amount of liquid is stored in the liquid storage region 28. The small amount of liquid may or may not be involved in the circulation, depending on a position of the first outlet 26. When the liquid has a low solubility, the liquid may be discharged through exposing the second outlet 27 to replace the liquid with the fresh liquid. The waste which has been subjected to the primary processing enters the second processing device 30 through the third outlet 29 for the re-processing.

As illustrated in FIG. 5, the second processing device 30 includes a second chamber 31. The second chamber 31 has a second inlet 32 and a fourth outlet 33. The waste which has been subjected to the primary processing enters the second chamber 31 through the second inlet 32. The waste which has been subjected to the re-processing is discharged through the fourth outlet 33.

The stainless steel filtering screen 34, the HEPA filtering screen 35, the activated carbon 36, and the porous foam 37 are arranged sequentially in the second chamber 31.

As illustrated in FIG. 6, the waste is subjected to the primary processing in the first chamber 21 by the liquid curtain 23, and then subjected to the re-processing through sequentially passing through the stainless steel filtering screen 34, the HEPA filtering screen 35, the activated carbon 36, and the porous foam 37. The pollution of the waste is noticeably reduced.

As illustrated in FIG. 7, the second connection plate 71 is mounted at the upper surface of the cover plate 50 and has the connection hole 711 for connecting the cover plate 50 with the base 1. The cover plate 50 has four first through holes 51 formed in a circumferential direction of the second connection plate 71. A space above the cover plate 50 is in communication with a space below the cover plate 50 through the first through hole 51. The waste generated during the spraying may enter the first processing device 20 through the first through hole 51.

As illustrated in FIG. 8, the base 1 includes the support platform 11 and the first support seat 12.

The support platform 11 includes a support platform body 111, a first support plate 112, and a first connection plate 113. The support platform body 111 and the first support plate 112 each have a flat plate structure. A surface area of the first support plate 112 is smaller than a surface area of the support platform body 111. The first support plate 112 is mounted below the first connection plate 113. The first connection plate 113 is connected between the first support plate 112 and the first support seat 12. The first connection plate 113 has a wedge shape.

The first support seat 12 includes the support seat body 121, the lead screw 122, the slider 123, the support rod 124, the limiting rod 125, the hand-cranked rod 126, and the second support plate 127.

The support seat body 121 is provided with a support portion at each of two ends of the support seat body 121. Two ends of the lead screw 122 are rotatably mounted at the support portions of the support seat body 121. The slider 123 has the first mounting hole and the second mounting hole. The hole wall of the first mounting hole has the internal thread. The second mounting hole has a smooth hole wall. The lead screw 122 passes through the first mounting hole at the slider 123. The limiting rod 125 passes through the second mounting hole at the slider 123. The two ends of the support rod 124 are rotatably connected to the slider 123 and a connection block disposed at a lower surface of the first support plate 112 of the support platform 11, respectively. The first connection plate 113 of the support platform 11 is rotatably connected to the support seat body 121. The limiting rod 125 is arranged in parallel with the lead screw 122. The limiting rod 125 has the smooth surface. The hand-cranked rod 126 is connected to an end part of the lead screw 122. The support seat body 121 is mounted at the second support plate 127.

When an angle of the support platform body 111 relative to the second support plate 127 needs to be adjusted, the hand-cranked rod 126 is manually rotated to drive the lead screw 122 to rotate relative to the support seat body 121. Through the engagement between the outer thread at the outer periphery of the lead screw 122 and the inner thread of the first mounting hole and a position limitation exerted by the limiting rod 125, the slider 123 moves in the axial direction of the lead screw 122, and thus the support rod 124 rotates relative to the slider 123. Therefore, the support platform 11 is lifted, which realizes a rotation of the support platform 11 relative to the first support seat 12, i.e., an object of adjusting the angle of the support plane of the support platform 11 relative to the horizontal plane.

As illustrated in FIG. 9, the base 1 further includes the second support seat 13 and the height adjustment device 14. The second support seat 13 has a flat plate structure. The height adjustment device 14 is disposed between the first support seat 12 and the second support seat 13. The height adjustment device 14 has the scissor structure and includes the fourth driving device 141 and the scissor 142. With the fourth driving device 141, the scissor 142 can be driven up and down to adjust the height of the first support seat 12 relative to the second support seat 13.

As illustrated in FIG. 10, the driving device 3 includes the first driving device 310, the second driving device 320, and the third driving device 330. The first driving device 310 is in driving connection with the spray nozzle 2 and is configured to drive the spray nozzle 2 to move in the first direction A relative to the base 1. The first driving device 310 is mounted at the second driving device 320. The second driving device 320 is configured to drive the first driving device 310 and the spray nozzle 2 to move in the second direction B relative to the base 1. The second driving device 320 is mounted at the third driving device 330. The third driving device 330 is configured to drive the second driving device 320, the first driving device 310, and the spray nozzle 2 to move in the third direction C relative to the base 1. The first direction A, the second direction B, and the third direction C are perpendicular to each other. With the first driving device 310, the second driving device 320, and the third driving device 330, the spray nozzle 2 can be moved in three directions perpendicular to each other to adjust the position of the spray nozzle 2 relative to the to-be-sprayed object, which improves the spraying effect.

The first driving device 310 includes the driving body 311 and the bracket 312 in driving connection with the driving body 311. The spray nozzle 2 is rotatably mounted at the bracket 312.

The bracket 312 has an arc-shaped chute. The first driving device 310 further includes a connection rod. The connection rod has an end rotatably connected to the bracket 312 and another end rotatable along the arc-shaped chute around a hinge point between the connection rod and the bracket 312. In this way, the spray nozzle 2 is rotated, relative to the bracket 312, by an angle ranging from 0° to 90° to adjust the angle of the spray nozzle 2 relative to the to-be-sprayed object. Therefore, the spraying at different positions of the to-be-sprayed object is realized.

In addition, the support platform body 111 is provided with the heating device capable of heating the to-be-sprayed object. For example, a maximum constant temperature may be controlled to 200 °C. For different solvent environments, the heating temperature may be selected appropriately to assist solvent evaporation and accelerate film formation. The temperature control device and the humidity control device are further disposed in the housing 40 to adjust the temperature and the humidity of an environment of the inside of the housing 40.

According to the embodiments of the spraying apparatus provided in the present disclosure, the waste generated during the spraying can be processed twice by the first processing device and the second processing device, which effectively reduces the pollution of the waste. The spray nozzle can be driven by the driving device to move, relative to the base, in three directions perpendicular to each other to adjust a distance between the spray nozzle and the base, which is of high operability. The support platform in the base is rotatable relative to the first support seat. Through tilting the support platform, liquid droplets generated at the spray nozzle can be dropped at a position where there is no to-be-sprayed object, which prevents a spraying result from being affected due to contamination of the to-be-sprayed object by the liquid droplets.

Although the present disclosure has been described with reference to preferred embodiments, various improvements can be made and members in the present disclosure can be replaced with equivalents without departing from the scope of the present disclosure. In particular, the technical features mentioned in each embodiment can be combined arbitrarily without any structural conflict. The present disclosure is not limited to the particular embodiments disclosed herein, and includes all technical solutions falling within the scope of the claims.

## Claims

1. A spraying apparatus, comprising:
a spraying region (10a) configured to accommodate a to-be-sprayed object therein;
a spraying body (10) configured to spray the to-be-sprayed object within the spraying region (10a);
a first processing device (20) in communication with the spraying region (10a), the first processing device (20) being configured to receive waste generated during the spraying and perform a primary processing on the waste; and
a second processing device (30) disposed downstream the first processing device (20) and configured to perform a re-processing on the waste which has been subjected to the primary processing.

2. The spraying apparatus according to claim 1, wherein the first processing device (20) comprises a liquid circulation system, a liquid curtain (23) being formed by enabling a liquid in the liquid circulation system to flow in a predetermined direction, wherein the liquid curtain (23) is used to absorb a substance in the waste that is capable of dissolving in the liquid.

3. The spraying apparatus according to claim 2, wherein the liquid circulation system comprises a first chamber (21) having a first inlet (22) in communication with the spraying region (10a), so that the liquid enters the first chamber (21) from the first inlet (22) and flows along an inner wall of the first chamber (21) to form the liquid curtain (23).

4. The spraying apparatus according to claim 3, wherein the inner wall of the first chamber (21) has a portion that is inclined relative to a horizontal direction.

5. The spraying apparatus according to claim 3 or 4, wherein the liquid circulation system further comprises a circulation pipeline (24) and a circulation pump (25), and the first chamber (21) has a first outlet (26), wherein:
the circulation pipeline (24) is connected between the first outlet (26) and the first inlet (22); and
the circulation pump (25) is disposed at the circulation pipeline (24).

6. The spraying apparatus according to claim 5, wherein the circulation pipeline (24) and the circulation pump (25) are disposed outside the first chamber (21).

7. The spraying apparatus according to any one of claims 3 to 6, wherein the first chamber (21) has a second outlet (27), the liquid being to be discharged from the first chamber (21) via the second outlet.

8. The spraying apparatus according to claim 7, wherein the first chamber (21) has a liquid storage region (28) configured to store the liquid, wherein:
the first outlet (26) is flush with or above a bottom surface of the liquid storage region (28); and
the second outlet (27) is in communication with the liquid storage region (28).

9. The spraying apparatus according to any one of claims 1 to 8, wherein the second processing device (30) comprises a plurality of filtering layers.

10. The spraying apparatus according to any one of claims 1 to 9, wherein the second processing device (30) comprises at least one of a stainless steel filtering screen (34), a High Efficiency Particulate Air Filter (HEPA) filtering screen (35), activated carbon (36), and a porous foam (37).

11. The spraying apparatus according to any one of claims 1 to 10, wherein the second processing device (30) comprises a stainless steel filtering screen (34), an HEPA filtering screen (35), activated carbon (36), and a porous foam (37) that are arranged sequentially in a discharge direction of the waste.

12. The spraying apparatus according to any one of claims 1 to 11, further comprising a housing (40) and a cover plate (50), wherein:
the spraying body (10) is disposed in inside the housing (40);
the spraying region (10a) is formed by an internal space of the housing (40);
the cover plate (50) covers a bottom of the housing (40);
the first processing device (20) is mounted at a bottom surface of the cover plate (50); and
the cover plate (50) has a first through hole (51) connecting inside of the housing (40) with the first processing device (20).

13. The spraying apparatus according to any one of claims 1 to 12, wherein the spraying body (10) comprises a base (1) configured to support the to-be-sprayed object and a spray nozzle (2) disposed above the base (1) and configured to spray paint to the to-be-sprayed object.

14. The spraying apparatus according to claim 13, wherein the spraying body (10) further comprises a first driving device (310), a second driving device (320) and a third driving device (330), wherein:
the first driving device (310) is in driving connection with to the spray nozzle (2) and configured to drive the spray nozzle (2) to move in a first direction relative to the base (1), and the first driving device (310) is mounted at the second driving device (320);
the second driving device (320) is configured to drive the first driving device (310) and the spray nozzle (2) to move in a second direction relative to the base (1), and the second driving device (320) is mounted at the third driving device (330); and
the third driving device (330) is configured to drive the second driving device (320), the first driving device (310), and the spray nozzle (2) to move in a third direction relative to the base (1),
wherein the first direction, the second direction, and the third direction are perpendicular to each other.

15. The spraying apparatus according to claim 14, wherein the first driving device (310) comprises a driving body (311) and a bracket (312) in driving connection with the driving body (311), the spray nozzle (2) being rotatably mounted at the bracket (312).

16. The spraying apparatus according to any one of claims 13 to 15, wherein the base (1) comprises a support platform (11) and a first support seat (12), the support platform (11) being configured to support the to-be-sprayed object and rotatably mounted at the first support seat (12) to enable an angle of a support plane of the support platform (11) with respect to a horizontal plane to be adjustable.

17. The spraying apparatus according to claim 16, wherein the first support seat (12) comprises a support seat body (121), a lead screw (122), a slider (123), and a support rod (124), wherein:
the lead screw (122) is rotatably mounted at the support seat body (121);
the slider (123) has a first mounting hole and is mounted at the lead screw (122) through the first mounting hole, a hole wall of the first mounting hole having an internal thread;
the support rod (124) has two ends rotatably connected to the slider (123) and the support platform (11), respectively; and
the support platform (11) is rotatably connected to the support seat body (121).

18. The spraying apparatus according to claim 16 or 17, wherein the base (1) further comprises a second support seat (13) and a height adjustment device (14), the height adjustment device (14) being disposed between the first support seat (12) and the second support seat (13) to adjust a height of the first support seat (12) relative to the second support seat (13).

19. The spraying apparatus according to any one of claims 13 to 18, further comprising a heating device disposed at the base (1), the heating device being configured to heat the to-be-sprayed object to a temperature ranging from 30 °C to 220 °C, and a heating temperature of the heating device being adjustable.

20. The spraying apparatus according to any one of claims 1 to 19, further comprising a temperature control device and/or a humidity control device, the temperature control device being configured to adjust a temperature of the spraying region (10a) to range from 25 °C to 65 °C, and the humidity control device being configured to adjust a humidity of the spraying region (10a) to range from 25 % to 95 %.
